# FASCICULE DE BREVET EUROPEEN

(11) **EP 2 677 372 B1**
(45) Date de publication et mention de la délivrance du brevet: **04.05.2016**
(21) Numéro de dépôt: 12172743.2
(22) Date de dépôt: 20.06.2012
(51) Int. Cl.: G04B 35/00, G04B 13/02, F16H 55/16, F16H 55/18

(54) **Roue à rattrapage de jeu**
Rad mit Spielnachstellung
Wheel with clearance compensation

(43) Date de publication de la demande: 25.12.2013
(73) Titulaire: Montres Breguet SA, 1344 L'Abbaye (CH)
(72) Inventeur: Zaugg, Alain, 1347 Le Sentier (CH)
(74) Mandataire: Giraud, Eric

(56) Documents cités:
- EP-A1- 2 003 522
- WO-A2-2009/114477
- WO-A2-2012/037593
- DE-C- 397 646
- FR-A- 699 318
- US-A- 4 437 356

## Description

### Domaine de l'invention

L'invention concerne une roue d'horlogerie réversible à rattrapage de jeu, pour l'engrènement avec une seconde denture constituée de secondes dents de largeur donnée consécutives selon un second pas constant sur un second diamètre primitif d'un mobile antagoniste, ladite roue comportant, agencée pour engrener avec ladite seconde denture, une première denture selon un premier cercle primitif et comportant une succession dans un même plan de paires de dents identiques entre elles et consécutives selon un premier pas constant sur ledit premier cercle primitif, chaque dite paire comportant, de part et d'autre d'un axe radial, une première dent flexible et une deuxième dent.

L'invention concerne encore un rouage d'horlogerie comportant au moins un second mobile comportant une seconde denture constituée de secondes dents de largeur donnée consécutives selon un second pas constant sur un second diamètre primitif, ledit rouage comportant au moins une première roue réversible à rattrapage de jeu et comportant, agencée pour engrener avec ladite seconde denture, une première denture selon un premier cercle primitif et comportant une succession dans un même plan de paires de dents identiques entre elles et consécutives selon un premier pas constant sur ledit premier cercle primitif, chaque dite paire comportant, de part et d'autre d'un axe radial, une première dent flexible et une deuxième dent.

L'invention concerne encore un mouvement d'horlogerie comportant au moins un tel rouage.

L'invention concerne encore une pièce d'horlogerie comportant au moins un tel mouvement, ou/et au moins un tel rouage.

L'invention concerne le domaine des mécanisme d'horlogerie comportant des moyens de transmission par rouage.

### Arrière-plan de l'invention

La recherche d'engrènement de dentures à jeu minimal, ou à rattrapage de jeu, est une préoccupation constante en horlogerie. La difficulté réside dans les inévitables variations d'entraxe, dues notamment aux jeux fonctionnels dans les pivots. Ces variations d'entraxe peuvent être compensées par des dentures flexibles, toutefois leur conception est délicate, en raison de leur consommation d'énergie, et donc de leur impact sur le rendement global du rouage. Un exemple est donné par le document EP 2 003 522 au nom de Chopard Manufacture SA, qui décrit un mobile denté à rattrapage de jeu avec une alternance de dents rigides et de dents flexibles, ce mobile coopérant avec une roue d'entraînement à dents rigides, la dent rigide d'entraînement étant pincée entre la dent rigide et la dent élastique de la roue menée, de façon à rattraper le jeu d'engrenage par le contact permanent entre la dent rigide de la roue menante et le flanc d'engrènement de la roue menée.

Une telle géométrie est conçue préférentiellement pour un sens de rotation, et se prête imparfaitement à un changement de sens d'engrènement. De plus, les roues flexibles connues se révèlent, à l'utilisation, très sensibles à l'usure.

Il s'agit donc, à la fois de rattraper le jeu, et d'éviter tout problème d'affichage lors d'un changement de sens, par exemple lors d'une mise à l'heure.

Le document WO 2012/037593 A2 au nom de MIBA SINTER AUSTRIA GmbH décrit encore une roue avec une exécution différenciée des dents dans le sens de l'épaisseur de la planche de la roue. Cette roue comporte plusieurs matériaux d'élasticités différentes.

Le document US4437356 divulgue une roue comportant des dents élastiquement déformables.

### Résumé de l'invention

L'invention se propose de définir un rouage dont l'engrènement soit sans jeu, quel que soit le sens de rotation, avec une consommation minimale de couple, et avec la moindre usure possible en service.

A cet effet, l'invention concerne une roue d'horlogerie réversible à rattrapage de jeu selon la revendication 1.

L'invention concerne encore un rouage d'horlogerie selon la revendication 5.

Selon une caractéristique de l'invention, à l'état libre, une première distance, mesurée sur ledit premier cercle primitif entre ladite première dent et ladite deuxième dent d'une même dite paire, est la distance la plus petite entre deux dites dents flexibles successives, et est sensiblement inférieure à ladite largeur donnée, mesurée sur ledit second cercle primitif, desdites secondes dents constituant ladite seconde denture.

Selon une autre caractéristique de l'invention, à l'état libre, une deuxième distance, mesurée sur ledit premier cercle primitif entre une dite première dent et une dite deuxième dent adjacentes mais appartenant à des dites paires différentes, est la distance la plus grande entre deux dites dents flexibles successives et est sensiblement inférieure à la somme de, d'une part ledit second pas de ladite seconde denture, et d'autre part ladite largeur donnée, mesurée sur ledit second cercle primitif, desdites secondes dents constituant ladite seconde denture.

L'invention concerne encore un mouvement d'horlogerie comportant au moins un tel rouage, caractérisé en ce que ledit second mobile est menant, et ladite première roue est menée, et en ce que ledit au moins un rouage est réversible et se comporte de façon identique dans ses deux sens de pivotement.

L'invention concerne encore une pièce d'horlogerie comportant au moins un tel mouvement, ou/et au moins un tel rouage, caractérisé en ce que ledit au moins un rouage est réversible et se comporte de façon identique dans ses deux sens de pivotement.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée et vue en plan, une partie d'un rouage selon l'invention, comportant une première roue à rattrapage de jeu selon l'invention avec une succession de paires de dents identiques, ces paires étant équidistantes, et chaque paire comportant une première dent flexible et une deuxième dent selon l'invention, dans une première position d'engrènement ;
- la figure 2 représente, le mécanisme de la figure 1 après un léger angle de pivotement des deux roues ;
- les figures 3 à 7 représentent une séquence de pivotement du rouage de la figure 1, depuis une première position de référence dite 0° de la première roue 10, en passant par des positions de pivotement tous les 6° de la roue 10 : 6° en figure 4, 12° en figure 5, 18° en figure 6, 24° en figure 7 ;
- la figure 8 représente, de façon analogue, une autre variante de l'invention, avec d'autres formes de dents ;
- la figure 9 représente, sous forme d'un schéma-blocs, une pièce d'horlogerie comportant un mouvement incluant un tel rouage selon l'invention.

### Description détaillée des modes de réalisation préférés

L'invention concerne le domaine des mécanisme d'horlogerie comportant des moyens de transmission par rouage.

L'invention se propose de définir un rouage dont l'engrènement soit sans jeu, quel que soit le sens de rotation, avec une consommation minimale de couple, et avec la moindre usure possible en service.

Le principe de l'invention est d'utiliser, pour une des roues du rouage, qualifiée ci-après de roue à rattrapage de jeu 10, une denture particulière, dont le pas varie entre deux dents successives : une fois plus petit que théorique, pour l'engrènement avec un mobile antagoniste donné, et une fois plus grand, le total du plus petit pas et du plus grand pas étant égal au double du pas théorique. Le plus petit pas est plus faible que la largeur d'une dent, au niveau du diamètre primitif, du mobile antagoniste, le plus grand pas est plus grand que cette même largeur.

Chaque dent est de préférence placée sur un bras souple, rattaché à un moyeu de la roue.

Cette configuration permet aux deux dents dont le pas est le plus petit de pincer une dent opposée d'un mobile antagoniste, et donc supprime les jeux.

Au pas suivant, lors du passage sur le pas le plus large, le pincement se fait sur les dents opposées extérieures, comme il va être détaillé ci-après.

Ainsi, l'invention concerne une roue 10 d'horlogerie à rattrapage de jeu. Cette première roue 10 est agencée pour engrener avec une seconde denture 21 constituée de secondes dents 23 de largeur donnée 24 consécutives selon un second pas P2 constant sur un second diamètre primitif 22 d'un mobile antagoniste.

La roue 10 comporte, agencée pour engrener avec une telle seconde denture 21, une première denture 11 selon un premier cercle primitif 12. Cette première denture 11 comporte une succession de paires 2 de dents. Ces paires 2 sont identiques entre elles, et consécutives selon un premier pas P1 constant sur le premier cercle primitif 12. Chaque telle paire 2 comporte, de part et d'autre d'un axe radial 3 qui les sépare, une première dent flexible 4 et une deuxième dent 5. Dans une exécution préférée, pour une utilisation indifférente dans l'un ou ou l'autre sens de pivotement, chaque paire 2 est symétrique par rapport à son axe radial 3, et la première dent 4 est le miroir de la deuxième dent 5.

Selon l'invention, chaque deuxième dent 5 est une dent flexible, et les distances 91, 92, mesurées sur le premier cercle primitif 12 entre une première dent 4 et une deuxième dent 5 successives sont différente deux à deux.

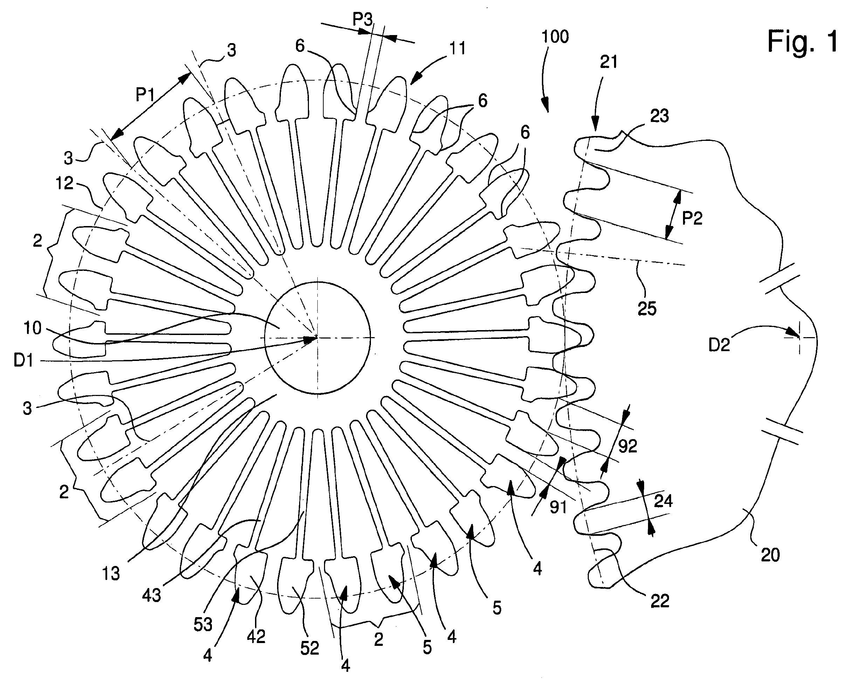

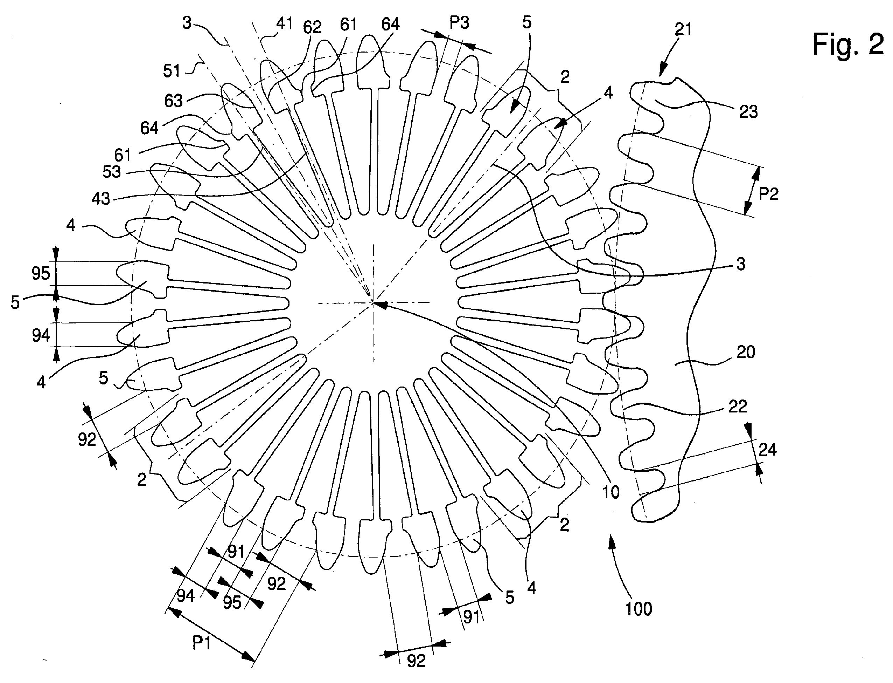

Tel que visible sur les figures 1 et 2, à l'état libre, une première distance 91, mesurée sur le premier cercle primitif 12 entre la première dent 4 et la deuxième dent 5 d'une même dite paire 2, est la distance la plus petite entre deux dents flexibles 4 et 5 successives, et est sensiblement inférieure à la largeur donnée 24, mesurée sur le second cercle primitif 22, des secondes dents 23 constituant la seconde denture 21.

De la même façon, à l'état libre, une deuxième distance 92, mesurée sur le premier cercle primitif 12 entre une première dent 4 et une deuxième dent 5 adjacentes mais appartenant à des paires 2 différentes et consécutives, est la distance la plus grande entre deux dents flexibles 4 et 5 successives, et est sensiblement inférieure à la somme de, d'une part le second pas P2 de la seconde denture 21, et d'autre part la largeur donnée 24, mesurée sur le second cercle primitif 22, des secondes dents 23 constituant cette seconde denture 21.

On comprend que le pas P1 entre deux paires 2 consécutives est égal à la somme de la première distance 91, de la deuxième distance 92, et des largeurs 94 et 95 des dents 4 et 5 sur le diamètre primitif 12.

De préférence, chaque première dent 4 et chaque deuxième dent 5 comportent chacune, de part et d'autre d'un axe radial, respectivement 41, 51, deux surfaces de butée latérales 6 tournées respectivement vers les deux deuxièmes dents 5 adjacentes et vers les deux premières dents 4 adjacentes.

A l'état libre, la troisième distance P3 entre deux telles surfaces de butée latérales 6 se faisant face de deux dents 4, 5, consécutives est constante.

Ces surfaces de butée 6 ont pour fonction de limiter l'effet d'un couple excessif appliqué par la roue menante, en l'occurrence un second mobile 20 porteur de la seconde denture 21 dans le cas d'un rouage 100 tel qu'illustré par les figures, sur la première roue 10 selon l'invention. Dans une réalisation particulière, non limitative, le jeu à l'état libre entre deux surfaces de butée 6 adjacentes est voisin de 0,04 mm.

La figure 2 montre ces surfaces de butée, respectivement 61 et 62 sur la première dent 4, de part et d'autre de son axe radial 41, et 63 et 64 sur la deuxième dent 5, de part et d'autre de son axe radial 51. En cas de choc, les surfaces 62 et 63 d'une même paire 2 viennent en appui l'une sur l'autre, et la surface 64 adjacente d'une paire 2 avec la surface 61 de la paire 2 directement voisine.

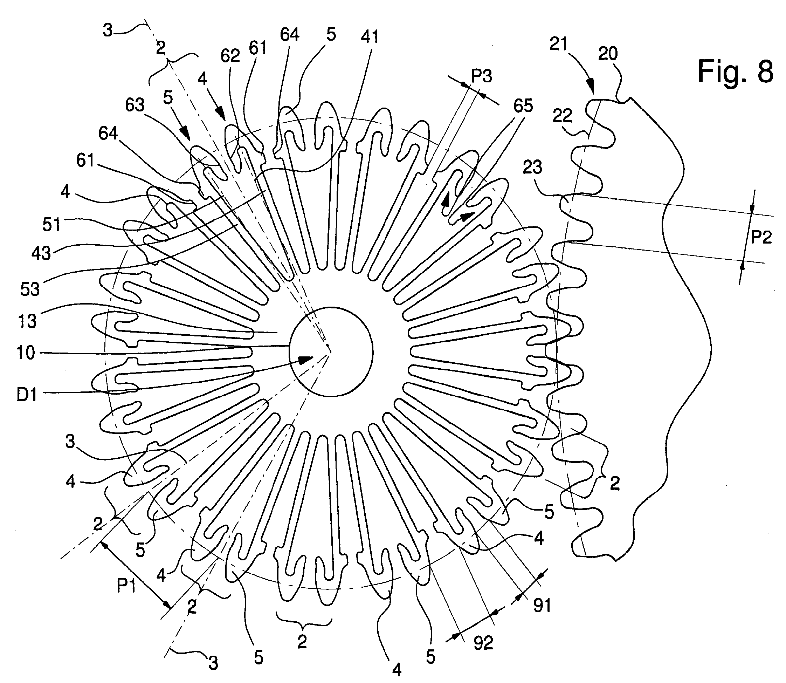

La figure 8 illustre une autre variante de l'invention où les première dent 4 et deuxième dent 5 ne sont pas rigides, mais souples, notamment constituées par une boucle élastique 65, qui améliore l'amortissement des chocs.

Dans une version particulière, illustrée par les figures 1 à 7, chaque première dent 4 comporte une tête 42, de préférence rigide, rattachée à un moyeu axial 13 de la roue 10 par un premier bras 43 flexible. De la même façon, chaque deuxième dent 5 comporte une tête 52, de préférence rigide, rattachée à un moyeu axial 13 de la roue 10 par un deuxième bras 53 flexible. Le choix d'une longueur importante pour chaque bras flexible 43, 53, permet de gérer plus facilement les forces très faibles en présence qu'une poutre réalisée dans une dent elle-même. Ainsi de préférence, les premières dents 4 et deuxièmes dents 5 sont en porte-à-faux par rapport à un moyeu axial 13 avec une sortie radiale comprise entre 0,50 et 0,95 fois la valeur du rayon maximal de la roue 10.

La force faible permet l'utilisation de la roue 10 dans des fonctions à faible couple et à grande vitesse de rotation, sans perturbation ni usure.

Avantageusement, pour son bon fonctionnement réverse, la roue 10 est symétrique par rapport à un plan passant par son axe de pivotement D1 et par un axe radial 3 d'une paire 2 qu'elle comporte.

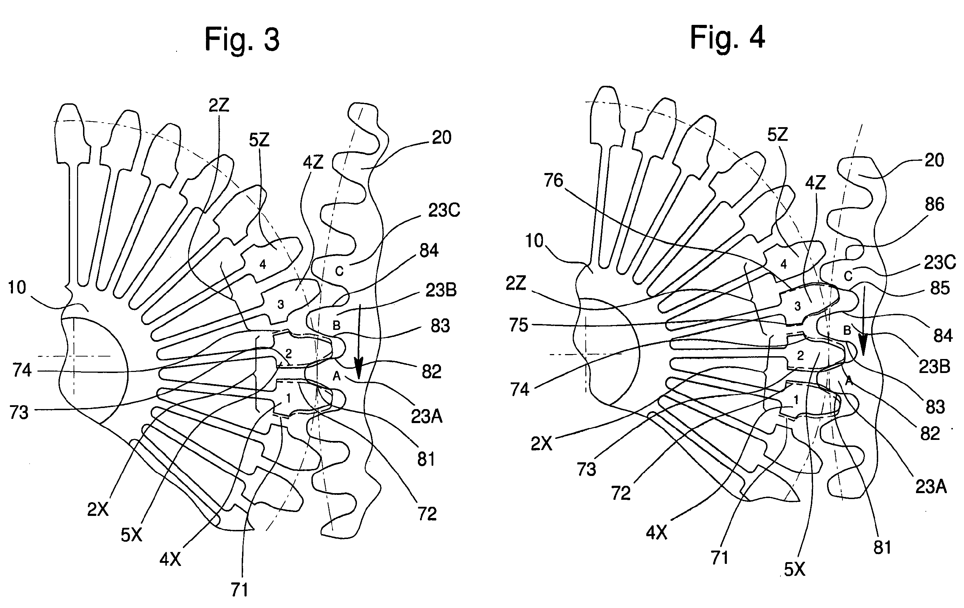

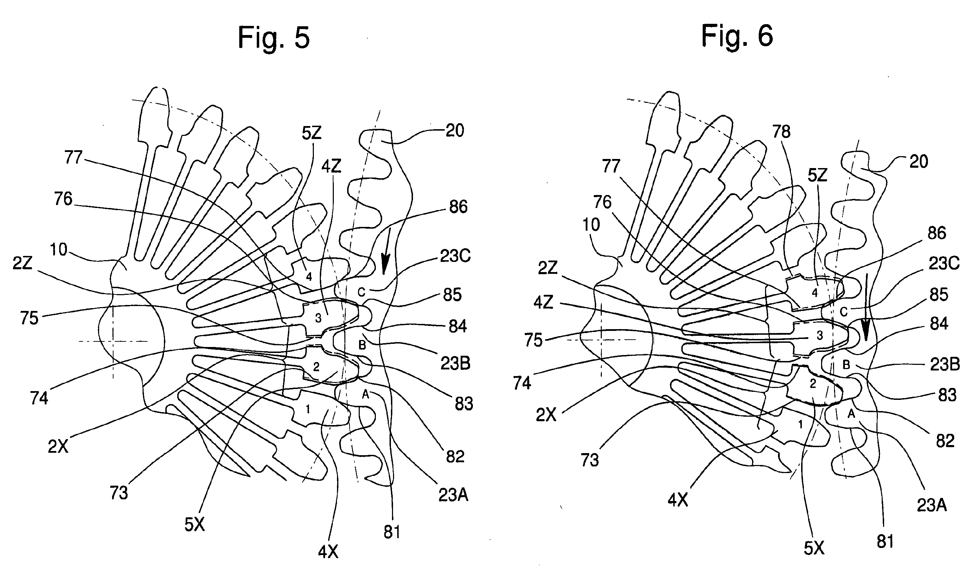

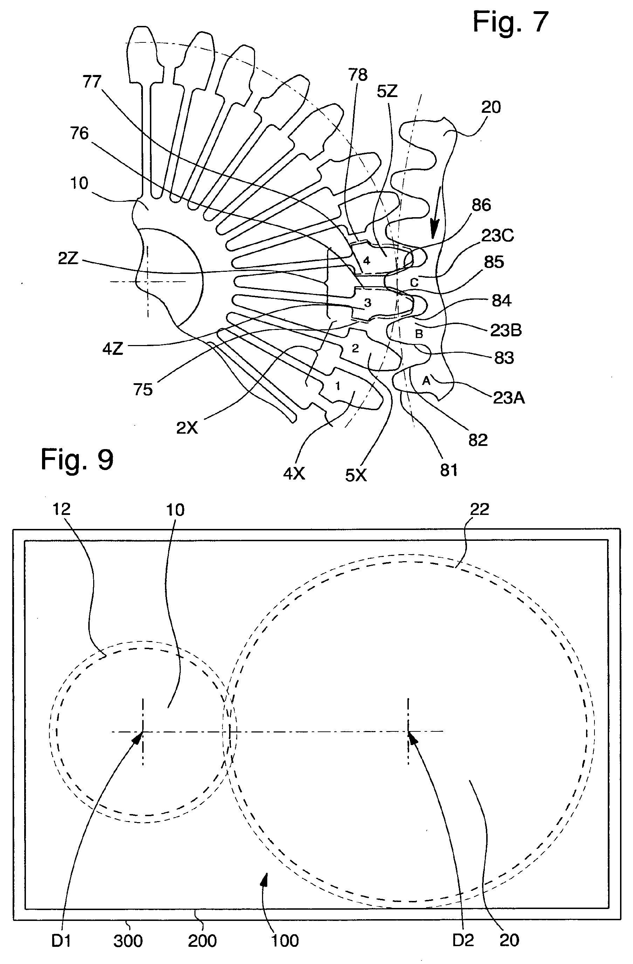

Les figures 3 à 7 représentent une séquence de pivotement du rouage de la figure 1, depuis une première position de référence dite 0° de la première roue 10, en passant par des positions de pivotement tous les 6° de la roue 10 : 6° en figure 4, 12° en figure 5, 18° en figure 6, 24° en figure 7. Les positions des différentes dents à l'état libre sont représentées en trait fin, et les positions déformées sous l'effet des efforts appliqués sont en trait interrompu. Dans cet exemple un second mobile 20, comportant la seconde denture 21, est menant, et pivote en sens anti-horaire.

Dans la position à 0° en figure 3, une dent 23A du second mobile 20 appuie, par une surface latérale inférieure 81, sur une surface latérale supérieure 72 de la première dent 4X de la première roue 10, et appuie sur cette dent 4X et tend à faire pivoter la première roue 10. La dent 23A est pincée par les dents 4X et 5X. La seconde surface latérale supérieure 82 de la dent 23A est en contact avec la deuxième dent 5X, et la déforme en tendant à la repousser dans le sens opposé à celui dans lequel la surface 81 appuie sur la dent 4X. le couple de rappel élastique de la dent 5X tend à la faire appuyer sur la dent 23A, et à accompagner son effort de poussée sur la dent 4X pour faire tourner la roue 10.

Dans la position à 6° en figure 4, la dent 23A est encore en contact pincé avec les dents 4X et 5X, la dent 23B suivante est libre. La dent 23C commence à rendre appui, par sa surface inférieure 85, sur la surface supérieure 76 de la dent 4Z, tendant à faire pivoter la roue 10.

Dans la position à 12° en figure 5, la dent 23A est encore en contact avec la dent 4X, mais sans exercer d'appui sur elle. La dent 23A est toujours en appui sur la surface inférieure 73 de la dent 5X. La dent 23B suivante est libre. La dent 23C appuie, par sa surface inférieure 85, sur la surface supérieure 76 de la dent 4Z, pour faire pivoter la roue 10.

Dans la position à 18° en figure 6, la dent 23A n'est plus en contact avec la dent 4X, et est toujours en appui sur la surface inférieure 73 de la dent 5X. La dent 23B suivante est libre. La dent 23c est pincée par les dents 4Z et 5Z La dent 23C appuie, par sa surface inférieure 85, sur la surface supérieure 76 de la dent 4Z, pour faire pivoter la roue 10. La seconde surface latérale supérieure 86 de la dent 23C est en contact avec la deuxième dent 5Z, et la déforme en tendant à la repousser dans le sens opposé à celui dans lequel la surface 85 appuie sur la dent 4Z. le couple de rappel élastique de la dent 5Z tend à la faire appuyer sur la dent 23C, et à accompagner son effort de poussée sur la dent 4Z pour faire tourner la roue 10.

Dans la position à 24° en figure 7, les dents 23A et 23B sont libérées. Seule la dent 23C est encore pincée de façon similaire à la position de la figure 6.

L'invention concerne encore un rouage 100 d'horlogerie comportant au moins une telle première roue 10, et au moins un second mobile 20 comportant une telle seconde denture 21 constituée de secondes dents 23 de largeur donnée 24 consécutives selon un second pas P2 constant sur un diamètre primitif 22.

Selon l'invention, en toute position d'engrènement de la première roue 10 et du second mobile 20, au moins une seconde dent 23 est pincée par une première dent 4 et une deuxième dent 5 d'une même paire 2 éloignées l'une de l'autre, à l'état libre, de la première distance 91.

Dans une variante préférée et illustrée par les figures 3 à 7, selon les positions angulaires d'engrènement entre la première roue 10 et le second mobile 20, ou bien une seule seconde dent 23 est pincée par une paire 2, tel que visible sur les figures 3, 4, 6, et 7, ou bien deux secondes dents 23 séparées par une troisième seconde dent 23 sont pincées par deux paires 2 successives, tel que visible sur la figure 5.

Dans une variante particulière, illustrée par les figures 3 à 7, sur une révolution complète du second mobile 20, seulement une sur deux des secondes dents 23 est, en alternance, en contact d'entraînement avec une des dents 4, 5, de la première denture 11 de la première roue 10. Ainsi, une dent sur deux du second mobile 20 est serrée par les dents flexibles, ce qui supprime le jeu. Il est possible, dans une variante particulière, non illustrée, de supprimer, quand le nombre de dents 23 de la seconde denture 21 du second mobile 20 est pair, une dent sur deux. Toutefois, la réalisation avec une denture continue, telle qu'illustré par les figures, est moins coûteuse et reste compatible avec les roues existantes, elle offre une meilleure facilité d'assemblage, puisqu'on peut positionner angulairement le second mobile 20 dans une position quelconque par rapport à la première roue 10, quand le nombre de dents du second mobile 20 est impair, toutes les dents sont sollicitées sur deux révolutions, cette configuration est donc un facteur favorable en termes de réduction d'usure.

De préférence, la seconde denture 21 du second mobile 20 est à secondes dents 23 rigides.

De préférence, pour le fonctionnement réverse, la seconde denture 21 comporte des dents 23 chacune symétrique par rapport à un axe radial 25 passant par l'axe de pivotement D2 du second mobile 20, et ledit second mobile 20 est symétrique par rapport à un plan passant par son axe de pivotement D2 et par un axe radial 25 d'une seconde dent 23 que comporte la seconde denture 21.

L'invention concerne encore un mouvement d'horlogerie 200 comportant au moins un tel rouage 100. De préférence le second mobile 20 est menant, et la première roue 10 est menée, et cet au moins un rouage 100 est réversible et se comporte de façon identique dans ses deux sens de pivotement.

L'invention concerne encore une pièce d'horlogerie 300 comportant au moins un tel mouvement 200, ou/et au moins un tel rouage 100 . De préférence cet au moins un rouage 100 est réversible et se comporte de façon identique dans ses deux sens de pivotement.

L'invention met en jeu des forces de pression faibles sur les dents pour annuler le jeu d'engrenage.

L'invention permet des couples d'engrènement très faibles, par exemple pour des applications de rotation de seconde ou d'engrènement de seconde chronographe.

Par rapport aux mécanismes connus, l'invention diminue les variations de couple dues aux frottements, et diminue les usures dues aux frottements. La fabrication est facilitée, la roue à rattrapage de jeu selon l'invention est facile à fabriquer en matériau micro-usinable, en silicium, ou NiP ou similaire, par un procédé « LIGA » ou similaire. Le montage est facile et sans risque d'erreur.

La réalisation selon l'invention permet, encore, la répartition des contraintes sur plusieurs dents lors de couples perturbateurs importants.

L'invention atteint ainsi les objectifs d'engrènement sans jeu dans les deux sens de marche, et de faible consommation de couple, ce qui la rend utilisable sur des affichages de seconde de mouvement petit ou plat, et de faible usure des dentures. Tout flottement d'aiguille est éliminé, en particulier dans le cas d'utilisation avec une grande aiguille de seconde centrale à fort balourd.

## Revendications

1. Roue (10) d'horlogerie réversible à rattrapage de jeu, pour l'engrènement avec une seconde denture (21) constituée de secondes dents (23) de largeur donnée (24) consécutives selon un second pas (P2) constant sur un second diamètre primitif (22) d'un mobile antagoniste, ladite roue (10) comportant, agencée pour engrener avec ladite seconde denture (21), une première denture (11) selon un premier cercle primitif (12) et comportant une succession de paires (2) de dents identiques entre elles et consécutives selon un premier pas (P1) constant sur ledit premier cercle primitif (12), chaque dite paire (2) comportant, de part et d'autre d'un axe radial (3), une première dent flexible (4) et une deuxième dent (5), chaque dite première dent (4) comportant une première tête (42) plus rigide qu'un premier bras (43) flexible qui rattache ladite première tête (42) à un moyeu axial (13) que comporte ladite roue (10), et chaque dite deuxième dent (5) comportant une deuxième tête (52) plus rigide qu'un deuxième bras (53) flexible qui rattache ladite deuxième tête (52) audit moyeu axial (13), **caractérisée en ce que** une première distance (91) est mesurée sur ledit premier cercle primitif (12) entre ladite première dent (4) et ladite deuxième dent (5) d'une même dite paire (2), et une deuxième distance (92) est mesurée sur ledit premier cercle primitif (12) entre une dite première dent (4) et une dite deuxième dent (5) adjacentes mais appartenant à des dites paires (2) différentes et consécutives, et **en ce que** ladite première distance (91) est différente de ladite deuxième distance (92), et encore **caractérisée en ce que** chaque dite première dent (4) et chaque dite deuxième dent (5) comportent chacune, de part et d'autre d'un axe radial (41 ; 51), deux surfaces de butée latérales (6) tournées respectivement vers lesdites deux deuxièmes dents (5) adjacentes et vers les deux dites premières dents (4) adjacentes, et **en ce que**, à l'état libre, la troisième distance (P3) entre deux dites surfaces de butée latérales (6) se faisant face de deux dites dents (4 ; 5) consécutives est constante, les deux dites surfaces de butées latérales (6) se faisant face de deux dites dents consécutives (4;5) étant agencées pour pouvoir venir en appui l'une sur l'autre en cas de choc.

2. Roue (10) selon la revendication précédente, **caractérisé en ce que**, pour une utilisation indifférente dans l'un ou l'autre sens de pivotement, chaque dite paire (2) est symétrique par rapport à son dit axe radial (3), et sa dite première dent (4) est le miroir de sa dite deuxième dent (5).

3. Roue (10) selon l'une des revendications précédentes, **caractérisé en ce que** lesdites premières dents (4) et deuxièmes dents (5) sont en porte-à-faux par rapport à un moyeu axial (13) avec une sortie radiale comprise entre 0,50 et 0,95 fois la valeur du rayon maximal de ladite roue (10).

4. Roue (10) selon l'une des revendications précédentes, **caractérisé en ce qu'**elle est symétrique par rapport à un plan passant par son axe de pivotement (D1) et par un dit axe radial (3) d'une dite paire (2) qu'elle comporte.

5. Rouage (100) d'horlogerie comportant au moins un second mobile (20) comportant une seconde denture (21) constituée de secondes dents (23) de largeur donnée (24) consécutives selon un second pas (P2) constant sur un second diamètre primitif (22), ledit rouage (100) comportant au moins une première roue réversible (10) à rattrapage de jeu et comportant, agencée pour engrener avec ladite seconde denture (21), une première denture (11) selon un premier cercle primitif (12) et comportant une succession paires (2) de dents identiques entre elles et consécutives selon un premier pas (P1) constant sur ledit premier cercle primitif (12), chaque dite paire (2) comportant, de part et d'autre d'un axe radial (3), une première dent flexible (4) et une deuxième dent (5), chaque dite première dent (4) comportant une première tête (42) plus rigide qu'un premier bras (43) flexible qui rattache ladite première tête (42) à un moyeu axial (13) que comporte ladite roue (10), et chaque dite deuxième dent (5) comportant une deuxième tête (52) plus rigide qu'un deuxième bras (53) flexible qui rattache ladite deuxième tête (52) audit moyeu axial (13), **caractérisé en ce que** une première distance (91) est mesurée sur ledit premier cercle primitif (12) entre ladite première dent (4) et ladite deuxième dent (5) d'une même dite paire (2), et une deuxième distance (92) est mesurée sur ledit premier cercle primitif (12) entre une dite première dent (4) et une dite deuxième dent (5) adjacentes mais appartenant à des dites paires (2) différentes et consécutives, et **en ce que** ladite première distance (91) est différente de ladite deuxième distance (92), et encore **caractérisé en ce que**, en toute position d'engrènement de ladite première roue (10) et dudit second mobile (20), au moins une dite seconde dent (23) est pincée par une dite première dent (4) et une dite deuxième dent (5) d'une même dite paire (2) éloignées l'une de l'autre, à l'état libre, de ladite première distance (91).

6. Rouage (100) selon la revendication précédente, **caractérisé en ce que** ladite roue (10) est une roue selon l'une des revendications 1 à 4.

7. Rouage (100) selon la revendication 5 ou 6, **caractérisé en ce que**, à l'état libre, une première distance (91), mesurée sur ledit premier cercle primitif (12) entre ladite première dent (4) et ladite deuxième dent (5) d'une même dite paire (2), est la distance la plus petite entre deux dites dents flexibles (4 ; 5) successives, et est sensiblement inférieure à ladite largeur donnée (24), mesurée sur ledit second cercle primitif (22), desdites secondes dents (23) constituant ladite seconde denture (21).

8. Rouage (100) selon l'une des revendications 5 à 7, **caractérisée en ce que**, à l'état libre, une deuxième distance (92), mesurée sur ledit premier cercle primitif (12) entre une dite première dent (4) et une dite deuxième dent (5) adjacentes mais appartenant à des dites paires (2) différentes, est la distance la plus grande entre deux dites dents flexibles (4 ; 5) successives et est sensiblement inférieure à la somme de, d'une part ledit second pas (P2) de ladite seconde denture (21), et d'autre part ladite largeur donnée (24), mesurée sur ledit second cercle primitif (22), desdites secondes dents (23) constituant ladite seconde denture (21).

9. Rouage (100) selon l'une des revendications 5 à 8, **caractérisé en ce que**, selon les positions angulaires d'engrènement entre ladite première roue (10) et ledit second mobile (20), ou bien une seule dite seconde dent (23) est pincée par une seule dite paire (2), ou bien deux dites secondes dents (23) séparées par une troisième dite seconde dent (23) sont pincées par deux dites paires (2) successives.

10. Rouage (100) selon l'une des revendications 5 à 9, **caractérisé en ce que**, sur une révolution complète dudit second mobile (20), seulement une sur deux desdites secondes dents (23) est en contact d'entraînement avec une des dites dents (4 ; 5) de ladite première denture (11) de ladite première roue (10).

11. Rouage (100) selon l'une des revendications 5 à 10, **caractérisé en ce que** ladite seconde denture (21) dudit second mobile (20) est à secondes dents (23) rigides.

12. Rouage (100) selon l'une des revendications 5 à 11, **caractérisé en ce que** ladite seconde denture (21) comporte des dites secondes dents (23) chacune symétrique par rapport à un axe radial (25) passant par l'axe de pivotement (D2) dudit second mobile (20), et **en ce que** ledit second mobile (20) est symétrique par rapport à un plan passant par son dit axe de pivotement (D2) et par un dit axe radial (25) d'une dite seconde dent (23) que comporte ladite seconde denture (21).

13. Mouvement d'horlogerie (200) comportant au moins un rouage (100) selon l'une des revendications 5 à 12, **caractérisé en ce que** ledit second mobile (20) est menant, et ladite première roue (10) est menée, et **en ce que** ledit au moins un rouage (100) est réversible et se comporte de façon identique dans ses deux sens de pivotement.

14. Pièce d'horlogerie (300) comportant au moins un dit mouvement (200) selon la revendication précédente, ou/et au moins un rouage (100) selon l'une des revendications 5 à 12, **caractérisé en ce que** ledit au moins un rouage (100) est réversible et se comporte de façon identique dans ses deux sens de pivotement.

## Patentansprüche

1. Nachstellbares, reversibles Uhrwerkrad (10) für den Eingriff mit einer zweiten Zahnung (21), die aus zweiten Zähnen (23) mit gegebener Breite (24) gebildet ist, die mit einer zweiten konstanten Schrittweite (P2) auf einem zweiten Grunddurchmesser (22) eines entgegenwirkenden beweglichen Elements aufeinander folgen, wobei das Rad (10) längs eines ersten Grundkreises (12) eine erste Zahnung (11) umfasst, die angeordnet ist, um mit der zweiten Zahnung (21) in Eingriff zu gelangen, und eine Folge von Paaren (2) gleicher Zähne enthält, die mit einer ersten konstanten Schrittweite (P1) auf dem ersten Grundkreis (12) aufeinander folgen, wobei jedes Paar (2) beiderseits einer radialen Achse (3) einen ersten biegsamen Zahn (4) und einen zweiten Zahn (5) aufweist,
wobei jeder erste Zahn (4) einen ersten Kopf (42) aufweist, der starrer als ein erster biegsamer Arm (43) ist, der den ersten Kopf (42) an einer axialen Nabe (13) befestigt, die das Rad (10) trägt, und wobei jeder zweite Zahn (5) einen zweiten Kopf (52) aufweist, der starrer als ein zweiter biegsamer Arm (53) ist, der den zweiten Kopf (52) an der axialen Nabe (13) befestigt, **dadurch gekennzeichnet,**
**dass** eine erste Strecke (91) auf dem ersten Grundkreis (12) zwischen dem ersten Zahn (4) und dem zweiten Zahn (5) desselben Paars (2) gemessen wird und eine zweite Strecke (92) auf dem ersten Grundkreis (12) zwischen einem ersten Zahn (4) und einem zweiten Zahn (5), die benachbart sind, jedoch zu unterschiedlichen und aufeinander folgenden Paaren (2) gehören, gemessen wird und dass die erste Strecke (91) von der zweiten Strecke (92) verschieden ist, und außerdem **dadurch gekennzeichnet, dass** jeder erste Zahn (4) und jeder zweite Zahn (5) jeweils beiderseits einer radialen Achse (41; 51) zwei seitliche Anschlagoberflächen aufweist, die zu den zwei benachbarten zweiten Zähnen (5) bzw. zu den zwei benachbarten ersten Zähnen (4) orientiert sind, und dass im freien Zustand die dritte Strecke (P3) zwischen zwei seitlichen Anschlagoberflächen (6), die zwei aufeinander folgenden Zähnen (4; 5) zugewandt sind, konstant ist, wobei die zwei seitlichen Anschlagoberflächen (6), die zwei aufeinander folgenden Zähnen (4; 5) zugewandt sind, dafür ausgelegt sind, sich im Fall eines Stoßes aneinander abstützen zu können.

2. Rad (10) nach dem vorhergehenden Anspruch, **dadurch gekennzeichnet, dass** für eine beliebige Verwendung in dem einen oder dem anderen Drehsinn jedes Paar (2) in Bezug auf seine radiale Achse (3) symmetrisch ist und sein erster Zahn (4) das Spiegelbild seines zweiten Zahns (5) ist.

3. Rad (10) nach einem der vorhergehenden Ansprüche, **dadurch gekennzeichnet, dass** die ersten Zähne (4) und die zweite Zähne (5) von einer axialen Nabe (13) mit einem radialen Überstand im Bereich des 0,50- bis 0,95-fachen Wertes des maximalen Radius des Rades (10) vorstehen.

4. Rad (10) nach einem der vorhergehenden Ansprüche, **dadurch gekennzeichnet, dass** es in Bezug auf eine Ebene, die durch seine Drehachse (D1) und durch eine radiale Achse (3) eines Paars (2), das es umfasst, verläuft, symmetrisch ist.

5. Uhrenräderwerk (100), das wenigstens ein zweites bewegliches Element (20) umfasst, das eine zweite Zahnung (21) aufweist, das aus zweiten Zähnen (23) mit gegebener Breite (24), die mit einer zweiten konstanten Schrittweite (P2) auf einem zweiten Grunddurchmesser (22) aufeinander folgen, gebildet ist, wobei das Räderwerk (100) wenigstens ein erstes nachstellbares reversibles Rad (10) umfasst und eine erste Zahnung (11) auf einem ersten Grundkreis (12), die dafür ausgelegt ist, mit der zweiten Zahnung (21) in Eingriff zu gelangen, aufweist und eine Folge von Paaren (2) gleicher Zähne umfasst, die mit einer ersten konstanten Schrittweite (P1) auf dem ersten Grundkreis (12) aufeinander folgen, wobei jedes Paar (2) beiderseits einer radialen Achse (3) einen ersten biegsamen Zahn (4) und einen zweiten Zahn (5) umfasst,
wobei jeder erste Zahn (4) einen ersten Kopf (42), der starrer als ein erster biegsamer Arm (43) ist, der den ersten Kopf (42) an einer axialen Nabe (13) befestigt, die das Rad (10) aufweist, umfasst, und wobei jeder zweite Zahn (5) einen zweiten Kopf (52), der starrer als ein zweiter biegsamer Arm (53) ist, der den zweiten Kopf (52) an der axialen Nabe (13) befestigt, umfasst, **dadurch gekennzeichnet, dass** eine erste Strecke (91) auf dem ersten Grundkreis (12) zwischen dem ersten Zahn (4) und dem zweiten Zahn (5) desselben Paars (2) gemessen wird und eine zweite Strecke (92) auf dem ersten Grundkreis (12) zwischen einem ersten Zahn (4) und einem zweiten Zahn (5), die benachbart sind, jedoch zu unterschiedlichen und aufeinander folgenden Paaren (2) gehören, gemessen wird und dass die erste Strecke (91) von der zweiten Strecke (92) verschieden ist, und außerdem **dadurch gekennzeichnet, dass** in jeder Eingriffposition des ersten Rades (10) mit dem zweiten beweglichen Element (20) wenigstens ein zweiter Zahn (23) durch einen ersten Zahn (4) und einen zweiten Zahn (5) desselben Paars (2), die voneinander im freien Zustand um die erste Strecke (91) beabstandet sind, eingeklemmt wird.

6. Räderwerk (100) nach dem vorhergehenden Anspruch, **dadurch gekennzeichnet, dass** das Rad (10) ein Rad nach einem der Ansprüche 1 bis 4 ist.

7. Räderwerk (100) nach Anspruch 5 oder 6, **dadurch gekennzeichnet, dass** im freien Zustand eine erste Strecke (91), die auf dem ersten Grundkreis (12) zwischen dem ersten Zahn (4) und dem zweiten Zahn (5) desselben Paars (2) gemessen wird, die kleinste Strecke zwischen zwei aufeinander folgenden biegsamen Zähnen (4; 5) ist und im Wesentlichen kleiner als die auf dem zweiten Grundkreis (22) gemessene gegebene Breite (24) zweiter Zähne (23), die die zweite Zahnung (21) bilden, ist.

8. Räderwerk (100) nach einem der Ansprüche 5 bis 7, **dadurch gekennzeichnet, dass** im freien Zustand eine zweite Strecke (92), die auf dem ersten Grundkreis (12) zwischen einem ersten Zahn (4) und einem zweiten Zahn (5), die benachbart sind, jedoch zu unterschiedlichen Paaren (2) gehören, gemessen wird, die größte Strecke zwischen zwei aufeinander folgenden biegsamen Zähnen (4; 5) ist und im Wesentlichen kleiner als die Summe aus einerseits der zweiten Schrittweite (P2) der zweiten Zahnung (21) und andererseits der auf dem zweiten Grundkreis (22) gemessenen gegebenen Breite (24) zweiter Zähne (23), die die zweite Zahnung (21) bilden, ist.

9. Räderwerk (100) nach einem der Ansprüche 5 bis 8, **dadurch gekennzeichnet, dass** je nach Winkelposition des Eingriffs zwischen dem ersten Rad (10) und dem zweiten beweglichen Element (20) entweder ein einziger zweiter Zahn (23) durch ein einziges Paar (2) eingeklemmt wird oder zwei zweite Zähne (23), die durch einen dritten der zweiten Zähne (23) getrennt sind, durch zwei aufeinander folgende Paare (2) eingeklemmt werden.

10. Räderwerk (100) nach einem der Ansprüche 5 bis 9, **dadurch gekennzeichnet, dass** bei einer vollständigen Umdrehung des zweiten beweglichen Elements (20) nur einer von zwei zweiten Zähnen (23) in einem Mitnahmekontakt mit einem der Zähne (4; 5) der ersten Zahnung (11) des ersten Rades (10) ist.

11. Räderwerk (100) nach einem der Ansprüche 5 bis 10, **dadurch gekennzeichnet, dass** die zweite Zahnung (21) des zweiten beweglichen Elements (20) starre zweite Zähne (23) besitzt.

12. Räderwerk (100) nach einem der Ansprüche 5 bis 11, **dadurch gekennzeichnet, dass** die zweite Zahnung (21) zweite Zähne (23) aufweist, die jeweils in Bezug auf eine radiale Achse (25), die durch die Drehachse (D2) des zweiten beweglichen Elements (20) verläuft, symmetrisch sind, und dass das zweite bewegliche Element (20) in Bezug auf eine Ebene, die durch seine Drehachse (D2) und durch eine radiale Achse (25) eines zweiten Zahns (23), den die zweite Zahnung (21) aufweist, verläuft, symmetrisch ist.

13. Uhrwerk (200), das wenigstens ein Räderwerk (100) nach einem der Ansprüche 5 bis 12 umfasst, **dadurch gekennzeichnet, dass** das zweite bewegliche Element (20) führend ist und das erste Rad (10) geführt wird und dass das wenigstens eine Räderwerk (100) reversibel ist und sich in seinen beiden Drehrichtungen gleich verhält.

14. Zeitmessgerät (300), das wenigstens ein Werk (200) nach dem vorhergehenden Anspruch und/oder wenigstens ein Räderwerk (100) nach einem der Ansprüche 5 bis 12 umfasst, **dadurch gekennzeichnet, dass** das wenigstens eine Räderwerk (100) reversibel ist und sich in seinen beiden Drehrichtungen gleich verhält.

## Claims

1. Backlash take-up timepiece wheel (10), for meshing with a second toothing (21) formed of second teeth (23) of given width (24) arranged consecutively with a second constant pitch (P2) on a second pitch diameter (22) of an opposing mobile component, said backlash take-up wheel (10) comprising, arranged to mesh with said second toothing (21), a first toothing (11) on a first pitch circle (12) comprising a series of identical pairs (2) of teeth arranged consecutively with a first constant pitch (P1) on said first pitch circle (12), each said pair (2) comprising, on either side of a radial axis (3), a first flexible tooth (4) and a second tooth (5), each said first tooth (4) having a first rigid head (42) more rigid than a first flexible arm (43) attaching said first rigid head (42) to an axial hub (13) of said backlash take-up wheel (10), and each said second tooth (5) having a second rigid head (52) more rigid than a second flexible arm (53) attaching said second rigid head (52) to an axial hub (13) of said backlash take-up wheel (10), **characterized in that in that** a first distance (91) is measured on said first pitch circle (12) between said first tooth (4) and said second tooth (5) of the same said pair (2), and a second distance (92) is measured on said first pitch circle (12) between one said first tooth (4) and one said second tooth (5) which are adjacent but appertain to different consecutive pairs (2), and **in that** said first distance (91) is different from said second distance (92), and further **characterized in that** each said first tooth (4) and each said second tooth (5) comprise, on either side of a radial axis (41; 51), two lateral stop surfaces (6) respectively facing towards said two second adjacent teeth (5) and towards said two first adjacent teeth (4), and that, in the unrestrained state, the third distance (P3) between two said lateral stop surfaces (6) facing two said consecutive teeth (4; 5) is constant, said facing lateral stop surfaces (6) of two said consecutive teeth (4; 5) being arranged to support each other in the event of a shock.

2. Backlash take-up wheel (10) according to the preceding claim, **characterized in that**, to allow use in either direction of pivoting, each said pair (2) is symmetrical to the radial axis (3) of said pair and **in that** said first tooth (4) is the mirror of said second tooth (5).

3. Backlash take-up wheel (10) according to any of the preceding claims, **characterized in that** said first teeth (4) and second teeth (5) overhang relative to an axial hub (13) with a radial projection of between 0.50 and 0.95 times the value of the maximum radius of said backlash take-up wheel (10).

4. Backlash take-up wheel (10) according to any of the preceding claims, **characterized in that** the wheel is symmetrical to a plane passing through the pivot axis (D1) thereof and through one said radial axis (3) of one said pair (2) comprised therein.

5. Timepiece gear train (100) comprising at least one second mobile component (20) comprising one second toothing (21) formed of said second teeth (23) of given width (24) arranged consecutively with a second constant pitch (P2) on a second pitch diameter (22), said timepiece gear train (100) including at least one backlash take-up wheel (10) comprising, arranged to mesh with said second toothing (21), a first toothing (11) on a first pitch circle (12) comprising a series of identical pairs (2) of teeth arranged consecutively with a first constant pitch (P1) on said first pitch circle (12), each said pair (2) comprising, on either side of a radial axis (3), a first flexible tooth (4) and a second tooth (5), each said first tooth (4) having a first rigid head (42) more rigid than a first flexible arm (43) attaching said first rigid head (42) to an axial hub (13) of said backlash take-up wheel (10), and each said second tooth (5) having a second rigid head (52) more rigid than a second flexible arm (53) attaching said second rigid head (52) to an axial hub (13) of said backlash take-up wheel (10), **characterized in that in that** a first distance (91) is measured on said first pitch circle (12) between said first tooth (4) and said second tooth (5) of the same said pair (2), and a second distance (92) is measured on said first pitch circle (12) between one said first tooth (4) and one said second tooth (5) which are adjacent but appertain to different consecutive pairs (2), and **in that** said first distance (91) is different from said second distance (92), and further **characterized in that**, in any meshing position of said first backlash take-up wheel (10) and of said second mobile component (20), at least one said second tooth (23) is clamped by one said first tooth (4) and one said second tooth (5) of one same said pair (2), separated from each other, in the unrestrained state, by said first distance (91).

6. Gear train (100) according to the preceding claim, **characterized in that** said first backlash take-up wheel (10) is a wheel according to any of claims 1 to 4.

7. Gear train (100) according to claim 5 or 6 **characterized in that**, in the unrestrained state, a first distance (91) measured on said first pitch circle (12) between said first tooth (4) and said second tooth (5) of the same said pair (2) is the smallest distance between two said successive flexible teeth (4) and (5), and is substantially smaller than said given width (24), measured on said second pitch circle (22), of said second teeth (23) forming said second toothing (21).

8. Gear train (100) according to any of claims 5 to 7, **characterized in that**, in the unrestrained state, a second distance (92), measured on said first pitch circle (12) between one said first tooth (4) and one said second tooth (5) which are adjacent but appertain to different said pairs (2), is the greatest distance between two said successive flexible teeth (4; 5) and is substantially smaller than the sum of said second pitch (P2) of said second toothing (21) and said given width (24), measured on said second pitch circle (22), of said second teeth (23) forming said second toothing (21).

9. Gear train (100) according to any of claims 5 to 8, **characterized in that**, according to the angular meshing positions of said first backlash take-up wheel (10) and of said second mobile component (20), either a single said second tooth (23) is clamped by a single said pair (2), or two said second teeth (23), separated by a third said second tooth (23), are clamped by two said successive pairs (2).

10. Gear train (100) according to any of claims 5 to 9, **characterized in that**, over one complete revolution of said second mobile component (20), only one out of two of said second teeth (23) is in drive contact with one of said teeth (4, 5) of said first toothing (11) of said first backlash take-up wheel (10).

11. Gear train (100) according to any of claims 5 to 10, **characterized in that** said second toothing (21) of said second mobile component (21) has rigid second teeth (23).

12. Gear train (100) according to any of claims 5 to 11, **characterized in that** said second toothing (21) includes said second teeth (23) which are each symmetrical to a radial axis (25) passing through the pivot axis (D2) of said second mobile component (20), and said second mobile component (20) is symmetrical to a plane passing through the pivot axis (D2) thereof and through a radial axis (25) of one said second tooth (23) comprised in said second toothing (21).

13. Timepiece movement (200) comprising at least one gear train (100) according to any of claims 5 to 12, **characterized in that** said second mobile component (20) drives and said first backlash take-up wheel (10) is driven, and **in that** said at least one gear train (100) is reversible and behaves identically in both directions of pivoting.

14. Timepiece (300) including at least one said movement (200) according to the preceding claim, and/or at least one gear train (100) according to any of claims 5 to 12, **characterized in that** said at least one gear train (100) is reversible and behaves identically in both directions of pivoting.
